(19) Europäisches Patentamt
European Patent Office
Office européen des brevets

(11) **EP 4 704 033 A1**

(12) **EUROPEAN PATENT APPLICATION**

(43) Date of publication:
**04.03.2026 Bulletin 2026/10**

(21) Application number: **24196725.6**

(22) Date of filing: **27.08.2024**

(51) International Patent Classification (IPC):
*G06T 7/60* *(2017.01)*

(52) Cooperative Patent Classification (CPC):
**G06T 7/60;** G06T 2207/10028; G06T 2207/20101

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
- **YUAN, Zhaorui**
  **5656 AG Eindhoven (NL)**
- **VAREKAMP, Christiaan**
  **5656 AG Eindhoven (NL)**

(74) Representative: **Philips Intellectual Property & Standards**
**High Tech Campus 52**
**5656 AG Eindhoven (NL)**

(54) **METHODS AND SYSTEMS FOR PERFORMING MEASUREMENTS USING IMAGING DATA**

(57) A method and system for performing measurements using imaging data. A set of 2D images and a corresponding depth map for each 2D image in the set are obtained. A measurement to be performed is identified in a first 2D image, and the measurement to be performed is then identified in each of the other 2D images in the set in which the measurement is visible. For each 2D in which the measurement to be performed is identified, a measure of suitability of performing the measurement is determined, and the measures of suitability are used to select one or more 2D images in which to perform the measurement. The measurement is then performed in the selected one or more 2D images.

700

| | |
|---|---|
| Obtain 2D images | 710 |
| Obtain depth maps | 720 |
| Identify measurement in first image | 730 |
| Identify measurement in remaining image(s) | 740 |
| Determine measure of suitability | 750 |
| Select image(s) to perform measurement | 760 |
| Perform measurement | 770 |

FIG. 7

EP 4 704 033 A1

## Description

FIELD OF THE INVENTION

The invention relates to the field of 3D imaging, and in particular to multi-view video plus depth.

BACKGROUND OF THE INVENTION

Immersive 3D video, also known as 6-degrees-of-freedom video, uses video captured from two or more views to provide an immersive experience. Immersive video can be used in a variety of applications, including entertainment, virtual tourism, education, health care, remote service, marketing, etc.

Immersive 3D video is often stored and transmitted in a multi-view plus depth format, in which a plurality of source views (or regions of source views) are stored and/or transmitted along with a per-pixel depth value. A video frame from a virtual viewpoint may then be synthesized using depth-based view synthesis followed by blending; this enables light-dependent effects to be synthesized accurately without requiring the use of complex functions to model the light-dependent effects.

An alternative to multi-view video plus depth is a volumetric representation of the scene (e.g. a mesh or point cloud), which defines the 3D geometry of the scene as a whole, rather than having depth values coupled to a particular source view. However, a high level of complexity is required for a volumetric representation to be capable of being used to render a scene at a high level of detail.

SUMMARY OF THE INVENTION

The invention is defined by the claims.

According to examples in accordance with an aspect of the invention, there is provided a method for performing measurements using imaging data, the method comprising: obtaining a set of 2D images of a scene, wherein each 2D image is a 2D image of the scene from a different viewpoint; for each 2D image in the set, obtaining a depth map for the 2D image; identifying a position of a first measurement to be performed in a first 2D image in the set; identifying, where visible, a position of the first measurement to be performed in each remaining 2D image in the set; for each 2D image in which the position of the first measurement to be performed is visible, determining a measure of suitability of performing the first measurement in the 2D image; based on the determined measures of suitability, selecting one or more 2D images in which to perform the first measurement; and processing at least the depth map corresponding to each of the selected one or more 2D images to perform the first measurement.

The inventors have recognized that some views of a scene are more suitable than others for performing a particular measurement of the scene (e.g. a position of a point within a scene, a distance between points or a dimension of an object). By automatically determining which image(s) to use to perform the measurement based on a measure of suitability, an accuracy of the measurement may be improved by ensuring that the measurement is performed in the most suitable image(s).

Each 2D image in the set may be a video frame belonging to a respective video sequence. In some examples, one or more of the 2D images in the set may be a virtual view of the scene, synthesized based on two or more captured images of the scene.

In some examples, identifying the position of the first measurement to be performed in the first 2D image in the set comprises receiving a user input indicating the position of the first measurement to be performed.

For instance, a user may select points in the first 2D image for measuring the distance between the points, or select an object for which a dimension (i.e. length, width or height) is to be measured.

In some examples, identifying the position of the first measurement to be performed in the first 2D image in the set comprises processing the first 2D image to identify a plurality of key points in the first 2D image.

The identified measurement to be performed may be a measurement between identified key points. In some examples, the step of identifying the measurement to be performed may comprise a combination of automatic selection and user input. For instance, a user may select an object or a part of an object, and a suitable feature point (e.g. a center of the object or a corner point) may be automatically selected for the object/object part, or points between which the measurement is to be performed may be selected automatically, and a user may refine the position of the points.

In some examples, selecting one or more 2D images in which to perform the first measurement comprises selecting a plurality of 2D images; and performing the first measurement comprises: for each of the selected plurality of 2D images, processing at least the depth map corresponding to the 2D image to determine an initial value for the first measurement; and processing the initial values for the first measurement to determine a final value for the first measurement.

The inventors have recognized that there is an error associated with each depth value in depth maps for a scene.

Determining the measurement in a plurality of 2D images, and combining information from multiple views to determine the final value for the measurement accounts for errors and noise in the depth values, thus improving a reliability of the measurement.

In some examples, determining the final value for the first measurement comprises determining a weighted average of the initial values, wherein each initial value is weighted according to the determined measure of suitability of performing the first measurement in the 2D image from which the initial value was determined.

In some examples, the step of obtaining a set of 2D images of a scene comprises: receiving a bitstream comprising encoded video data and depth information for a scene; and decoding the video data and depth information.

In some examples, the bitstream may also comprise measurement data and an indication of the viewpoints of each of the one or more 2D images used to generate the measurement data (i.e. the method may comprise performing additional measurements for video data for which some measurements have already been performed).

In some examples, the bitstream may comprise a request to perform a particular measurement.

In some examples, the method further comprises processing the first measurement to generate measurement data for the scene.

The measurement data may comprise the first measurement and/or any information derived from the first measurement.

In some examples, the first measurement is a first dimension of an object in the scene; and generating measurement data for the scene comprises: performing one or more further measurements, wherein each further measurement is a further dimension of the object, and wherein each further measurement is performed by: identifying a position of the further measurement to be performed in a first 2D image in the set; identifying, where visible, a position of the further measurement to be performed in each remaining 2D image in the set; for each 2D image in which the position of the further measurement to be performed is visible, determining a measure of suitability of performing the further measurement in the 2D image; based on the determined measures of suitability, selecting one or more 2D images in which to perform the further measurement; and processing at least the depth map corresponding to each of the selected one or more 2D images to perform the further measurement; and processing the first measurement and the one or more further measurements to generate the measurement data.

In some examples, the measurement data comprises one or more of: the first measurement and the one or more further measurements; an area of the object; a volume of the object; and/or a size and position of a 3D bounding box for the object.

There is also provided a method for encoding measurement data for a scene, the method comprising: obtaining measurement data generated by performing one or more measurements in one or more 2D images; and encoding, into a bitstream: the measurement data; and an indication of the viewpoint of each of the one or more 2D images used to perform the first measurement.

This allows measurements to be performed at a first location (e.g. by an expert) and transmitted to another location. This allows measurements to be reproduceable.

Including an indication of which image(s) were used to perform the first measurement enables the measurement data to be reproduced.

Where the measurement data also includes information derived from one or more further measurements, the bitstream may include an indication of the viewpoint of each of the one or more 2D images used to perform each further measurement.

In some examples, the measurement data may be obtained using any of the methods described above.

In some examples, one or more of the 2D images each belong to a respective video sequence of the scene; and the method further comprises encoding each video sequence and depth information for each video sequence into the bitstream, wherein the measurement data and the indication of the viewpoint of each of the one or more 2D images used to perform the first measurement are adjacent in the bitstream to the one or more of the 2D images that belong to the one or more video sequences.

In other words, the measurement data can be packed with the associated images in the bitstream. In this way, a decoder/parser is able to identify where in a video sequence the measurement data belongs.

In some examples, one or more of the 2D images each belong to a respective video sequence of the scene; and the method further comprising encoding, into the bitstream, an indication of the position of the one or more 2D images in the video sequences.

This allows the measurement data to be transmitted separately to the video sequences while enabling a decoder to identify where in the video sequences the measurement data belongs. The indication of the position of the set of 2D video frames in the video sequences may, for example, be a timestamp or frame count.

There is also proposed a computer program product comprising computer program code means which, when executed on a computing device having a processing system, cause the processing system to perform all of the steps of the method described above.

According to examples in accordance with another aspect of the invention, there is provided a processing system for performing measurements using imaging data, the processing system being configured to: obtain a set of 2D images of a scene, wherein each 2D image is a 2D image of the scene from a different viewpoint; for each 2D image in the set, obtain a depth map for the 2D image; identify a position of a first measurement to be performed in a first 2D image in the set; identify, where visible, a position of the first measurement to be performed in each remaining 2D image in the set; for each 2D image in which the position of the first measurement to be performed is visible, determine a measure of suitability of performing the first measurement in the 2D image; based on the determined measures of suitability, select one or more 2D images in which to perform the first measurement; and process the selected one or more 2D images and corresponding one or more depth maps to perform the first measurement.

There is also provided a processing system for encoding measurement data for a scene, the processing system being configured to: obtain measurement data generated by performing one or more measurements in one or more 2D images; and encode, into a bitstream: the measurement data; and an indication of the viewpoint of each of the one or more 2D images used to perform the first measurement.

According to examples in accordance with yet another aspect of the invention, there is provided a bitstream comprising: measurement data generated by performing one or more measurements in one or more 2D images; and an indication of a viewpoint of each of the one or more 2D images used to generate the measurement data.

These and other aspects of the invention will be apparent from and elucidated with reference to the embodiment(s) described hereinafter.

## BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a system for performing measurements using imaging data, according to an embodiment of the invention;

Fig. 2 illustrates how a position of points defining a first measurement to be performed may be refined;

Fig. 3 illustrates the selection of one or more 2D images, from a first set of 2D images, for performing the first measurement based on suitability;

Fig. 4 illustrates the selection of one or more 2D images, from a second set of 2D images, for performing the first measurement based on suitability;

Fig. 5 illustrates a first video processing pipeline, according to an embodiment of the invention;

Fig. 6 illustrates a second video processing pipeline, according to an embodiment of the invention;

Fig. 7 illustrates a method for performing measurements using imaging data, according to an embodiment of the invention; and

Fig. 8 illustrates a method for encoding measurement data for a scene, according to an embodiment of the invention.

## DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for performing measurements using imaging data. A set of 2D images and a corresponding depth map for each 2D image in the set are obtained. A measurement to be performed is identified in a first 2D image, and the measurement to be performed is then identified in each of the other 2D images in the set in which the measurement is visible. For each 2D in which the measurement to be performed is identified, a measure of suitability of performing the measurement is determined, and the measures of suitability are used to select one or more 2D images in which to perform the measurement. The measurement is then performed in the selected one or more 2D images.

Illustrative embodiments may, for example, be employed in educational applications (e.g. remote teaching), medical applications (e.g. remote diagnosis) and entertainment/broadcasting applications (e.g. remote sports analysis).

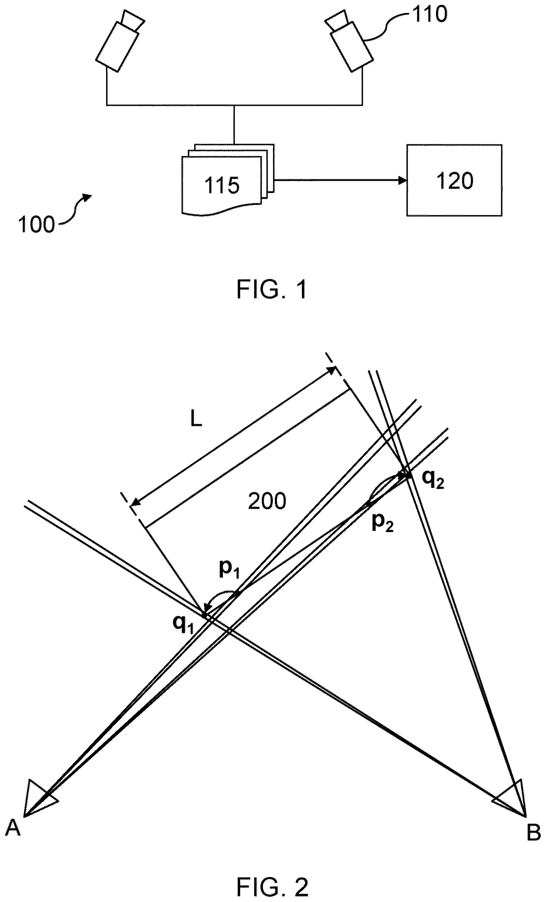

Fig. 1 illustrates a system 100 for performing measurements using imaging data, according to an embodiment of the invention. The system 100 comprises a plurality of cameras 110 and a processing system 120. The processing system 120 is, itself, an embodiment of the invention.

The plurality of cameras 110 are each configured to acquire imaging/video data of a scene from a different viewpoint (i.e. each of the plurality of cameras has a different position and/or orientation to each other camera). Fig. 1 shows two cameras; however, the skilled person will appreciate that a greater number of cameras may be used in the system 100.

The processing system 120 is configured to obtain a set of 2D images 115 of the scene, each 2D image representing the scene from a different viewpoint. The set of 2D images includes two or more 2D images, and may include one or more source images (i.e. one or more images acquired by a camera) and/or one or more synthesized images (i.e. one or more images from a virtual viewpoint synthesized based on two or more source views of the scene).

The set of 2D images may represent the scene at a single point in time (i.e. any source image in the set may have been acquired by a camera at a same point in time as any other source image, and any source views used to synthesize any images in the set may have been acquired by a camera at a same point in time as each other and any other source views included in the set). In some examples, one or more of the 2D images in the set may belong to a respective video sequence of the scene (e.g. the plurality of cameras may each acquire a video sequence of the scene, and each source image in the set may be a video frame belonging to a respective video sequence).

For illustrative purposes, Fig. 1 shows the processing system directly obtaining the set of 2D images 115 from the plurality of cameras 110; however, as the skilled person will readily appreciate, the processing system may obtain the set of 2D images in other ways. For instance, the processing system 120 may obtain the set of 2D images 115 by receiving a bitstream comprising encoded imaging or video data for the scene (i.e. captured by the plurality of cameras), decoding the bitstream and reconstructing and/or synthesizing 2D images from the image or video data. In another example, the processing system may obtain the set of 2D images by directly obtaining 2D source images acquired by the plurality of cameras, and synthesizing one or more 2D images from the 2D source images.

The processing system 120 is further configured to obtain a depth map for each 2D image 115 in the set. In some examples, including examples in which the processing system obtains the set of 2D images directly from the plurality of cameras 110, the processing system may obtain the depth map for each 2D image in the set by processing the set of 2D images using any suitable depth estimation method to generate the depth maps. In some examples, the system 100 may further comprise one or more depth sensors (e.g. each camera may be housed in a camera unit further comprising a depth sensor), and the processing system may be configured to receive depth data acquired by the one or more depth sensors and generate the depth map for each 2D image based on the depth data acquired by the one or more depth sensors.

In yet other examples, the processing system may obtain already-generated depth maps. For instance, where the processing system obtains the set of 2D images by receiving a bitstream comprising encoded imaging/video data for the scene as described above, the bitstream may further comprise encoded depth data for the scene (which may have been acquired by using depth estimation and/or by depth sensing). In other words, the bitstream may have been encoded in a multi-view plus depth format. The processing system may then obtain the depth maps for the set of 2D images by decoding the bitstream and reconstructing the depth maps corresponding to the 2D images in the set based on the depth data.

Having obtained the set of 2D images 115 and the depth maps, the processing system 120 is configured to identify a position of a first measurement to be performed in a first 2D image in the set. The first measurement may, for example, be a world coordinate for a point in the 2D image (i.e. a coordinate in physical space for a point in the scene represented by the point in the 2D image, such as a world coordinate for a center of an object or a key point of an object), a (physical) distance between two points in the scene that are captured in the first 2D image, or a dimension of an object captured in the first 2D image.

In some examples, the processing system 120 may identify the position of the first measurement to be performed in the first 2D image in the set by receiving a user input indicating the position of the first measurement to be performed. For instance, a video sequence (e.g. a video sequence acquired by one of the cameras 110, or a 3D video sequence combining information from the video sequences acquired by the plurality of cameras) may be displayed to a user via a display device, and the user may pause the video sequence and select one or more points or an object to be measured. The video frame at which the video sequence is paused is then the first 2D image. The first 2D image may be a video frame captured by one of the plurality of cameras or a "virtual" video frame synthesized from video frames captured by the plurality of cameras. Video frames corresponding to a same time as the first 2D image (e.g. acquired by the plurality of cameras at a same time as the first 2D image frame or synthesized from video frames acquired at the same time) may form the remainder of the set of 2D video frames.

The first measurement to be performed may be defined by the number and/or type of points selected by the user. For instance, if the user selects a single point in the first 2D image, the first measurement to be performed may be a world coordinate for a point in the 3D scene derived from a set of multi-view images, or a dimension of an object to which the point belongs. If the user selects two points in the first 2D image, the first measurement to be performed may be a real-world distance (e.g. in meters or another suitable physical unit) between the two points.

Techniques for user selection of one or more points will be apparent to the skilled person. For instance, the user may select a region of interest in the first 2D image and then zoom in to select a particular pixel within the region of interest. In some examples, the user input indicating the first measurement to be performed may be combined with an automatic point selection technique in order to identify the first measurement to be performed. For instance, the user may provide a rough indication of the location of one or more points, and, for each of the one or more points, the processing system may reposition the point using a snapping technique (e.g. snapping to a corner of an object closest to the point, to an exact position of the center of the object or to another point having an identifiable feature).

In some examples, the processing system 120 may additionally or alternatively identify the position of the first measurement to be performed in the first 2D image by processing the first 2D image to identify a plurality of key points in the first 2D image. In some examples, the processing system may identify a position for each of a plurality of measurements to be performed, by identifying a one or more key points for each object in each 2D image in the set, and may repeat the steps described below with respect to the first measurement for each of the plurality of measurements. In other examples, the automatic identification of key points may be combined with user input to identify the position of the first measurement to be performed; for instance, a user may provide a user input identifying the first 2D image, then the processing system may identify and display a plurality of key points in the selected 2D image, and the user may select one or more of the displayed key points to indicate the position of the measurement to be performed. In some examples, the user may identify a particular object within the selected 2D image, and the processing system may identify and display only key points for the identified object.

In some examples, a separate processing system may be used to identify the plurality of key points in the first 2D image. This may, for example, occur in cases where the separate processing system is able to use a proprietary algorithm for identifying the plurality of key points that is not available to the processing system 120. The processing system 120 may, for example, process the first 2D image to identify one or more objects for which the plurality of key points is to be identified, and encode at least the first 2D image into a bitstream (optionally accompanied by one or more other images in the set of 2D images and/or images belonging to a same video sequence as the first 2D image where relevant). The bitstream may then be transmitted to the separate processing system. An instruction to identify a plurality of key points in the first 2D image for each of the one or more objects may be transmitted to the separate processing system, either as part of the bitstream or separately. The instruction may include an identification of the one or more objects and, where relevant, an identification of the first 2D image.

The separate processing system may be configured to receive and decode the bitstream, and to process the first 2D image to identify the plurality of key points for each of the one or more objects. The separate processing system may then transmit information identifying each of the plurality of key points (e.g. image coordinates for each key point in the first 2D image) back to the processing system 120, in order for the processing system to perform the first measurement. Performing the measurement at the processing system 120 may result in a higher quality and more reliable measurement than performing the measurement at the separate processing system, as there will be some information loss in encoding and transmitting the imaging/video data (also, data may sometimes be changed by generative AI during transmission). This is particularly the case where the processing system 120 obtained the set of 2D images directly from the plurality of cameras 110 (i.e. the processing system 120 has access to raw imaging data).

As previously mentioned, in some examples, the processing system 120 may obtain the set of 2D images 115 and depth maps by receiving and decoding a bitstream comprising encoded imaging or video data for the scene. In some examples, the bitstream may further comprise a request to perform a particular measurement. This may, for example, occur in cases where the processing system is able to use a proprietary algorithm for identifying and/or performing the measurement that was not available to a processing system that encoded the bitstream (e.g. a proprietary algorithm for key point identification), or in cases where user expertise is required to identify measurement points (e.g. in medical applications).

A request to perform a particular measurement may, for example, comprise an indication of where in a video sequence encoded in the bitstream the measurement is to be performed (e.g. a timestamp or frame count), and an indication of the type of measurement to be performed (e.g. an indication that the measurement is a distance between a pair of objects and an object ID for each object in the pair, or an indication that the measurement is a particular dimension of an object (e.g. a length) and an object ID for the object). In some examples, the request to perform a particular measurement may be transmitted separately to the bitstream comprising the encoded imaging or video data.

The processing system may then identify the position of the first measurement to be performed in the first 2D image based on the request, either automatically (e.g. where a proprietary algorithm is used) or by providing a further request, via a user interface, to a user to identify the position of the first measurement (e.g. where an expert user is required).

The processing system 120 is then configured to identify a position of the first measurement to be performed in each remaining 2D image in the set in which the first measurement is visible. In other words, the processing system 120 is configured to identify, where visible, one or more measurement points defining the first measurement to be performed in each remaining 2D image. For instance, where the first measurement to be performed is a world coordinate for a point in the scene, the processing system may identify, where visible, a pixel in each remaining 2D image corresponding to a pixel identified in the first 2D image as representing the point for which the first measurement is to be performed. Where the first measurement to be performed is a distance between a first point in the scene and a second point in the scene, the processing system may identify, where visible, pixels representing the first and second points in each remaining 2D image, by identifying a pixel corresponding to a pixel identified in the first 2D image as representing the first point and a pixel corresponding to a pixel identified in the first 2D image as representing the second point. The position of the first measurement to be performed may then be considered to have been identified in a 2D image only if both a pixel representing the first point and a pixel representing the second point are able to be identified in the 2D image. Corresponding pixels may be identified by warping each pixel representing a measurement point in the first 2D image to each remaining 2D image, and performing feature detection and feature matching to determine whether the warped pixel corresponds to the same point in 3D space.

In some examples, the step of identifying the position of the first measurement to be performed in each remaining 2D image (where visible) may involve, for at least one of the remaining 2D images, refining a position of one or more of the points defining the first measurement to be performed. This may, for example, occur in cases where the measurement to be performed is a dimension of an object in the scene (e.g. a length, width or height), as the points of the object furthest from one another in the direction of the dimension may not always be visible in the first 2D image (or, if visible, may not have been accurately selected by a user in examples in which the first measurement to be performed is identified in the first 2D image based on a user input). The processing system may refine the position of one or both points between which the first measurement is to be performed in order to determine the dimension of the object, by repositioning the respective point at a respective edge of the object in one or more of the remaining 2D images.

Fig. 2 illustrates how the position of points defining the first measurement to be performed may be refined. The first measurement to be performed has been identified in a first 2D image at viewpoint A by a user selecting pixels corresponding to points $\mathbf{p}_1$ and $\mathbf{p}_2$ of object 200, indicating that the first measurement to be performed is a length L of the object 200. Due to the orientation of object 200 with respect to viewpoint A, the depth of the surface on which points $\mathbf{p}_1$ and $\mathbf{p}_2$ appear changes rapidly as a function of image coordinates in the first 2D image. This means that the pixels selected by the user, which appear to be at or close to the edges of the object 200 in the first 2D image, are actually some distance from the edges, and measuring the distance between these points would provide an inaccurate value for the length L of the object 200.

The position of the first measurement to be performed may then be identified in a second 2D image, in the same set as the first 2D image, at viewpoint B, by identifying corresponding pixels representing the points $\mathbf{p}_1$ and $\mathbf{p}_2$ in the second 2D image. However, from viewpoint B, it is apparent that the points $\mathbf{p}_1$ and $\mathbf{p}_2$ are not at the edges of the object. The selection of the pixel at a first edge of object 200 may then be shifted from the pixel representing the point $\mathbf{p}_1$ towards the first edge of the object, to a pixel representing the point $\mathbf{qi}.$ Similarly, the selection of the pixel at a second edge of the object 200 may be shifted from the pixel representing the point $\mathbf{p}_2$ towards the second edge of the object, to a pixel representing the point $\mathbf{q}_2$.

In some examples, the step of refining the position of one or more points defining the first measurement to be performed may only be carried out on the 2D image(s) in which the first measurement is performed (i.e. this step may be performed after selecting the 2D image(s) in which to perform the first measurement).

Returning to Fig. 1, the processing system 120 is configured, for each 2D image in the set in which the position of the first measurement to be performed is visible, to determine a measure of suitability of performing the first measurement in the 2D image.

The measure of suitability may depend on a distance between the viewpoint of the 2D image and the first measurement to be performed and/or an angle between the viewpoint of the 2D image and the first measurement to be performed (if the first measurement is a distance measurement). Generally, an image from a viewpoint that is closer to the first measurement to be performed will be more suitable for performing the first measurement than an image from a viewpoint that is further away. Similarly, an image from a viewpoint that is closer to being orthogonal to the first measurement to be performed will be more suitable for performing the first measurement than an image from a viewpoint that is further from being orthogonal. The distance and/or angle between the viewpoint of the 2D image and the first measurement may, in some examples, be determined based on the depth values of the one or more points defining the first measurement in the depth map corresponding to the 2D image.

In some examples, where the first measurement to be performed is a distance measurement, the measure of suitability may be a distance between image coordinates representing the measurement (i.e. a distance between a first pixel representing a first measurement point and a second pixel representing a second measurement point). For instance, the measure of suitability for a 2D image may be given by $\|\tilde{\mathbf{p}}_1 - \tilde{\mathbf{p}}_2\|_2$, where $\tilde{\mathbf{p}}_1$ and $\tilde{\mathbf{p}}_2$ are image coordinates in the 2D image identified as corresponding to end points of the first measurement. A distance between the image coordinates accounts both for the distance between the viewpoint of the 2D image and the first measurement to be performed and the angle between the viewpoint of the 2D image and the first measurement to be performed, as the image coordinates will be closer together if the viewpoint is further away and/or if the angle between the viewpoint and the first measurement is further from the orthogonal. Therefore, a larger distance between the image coordinates indicates that the 2D image is more suitable for performing the first measurement.

In some examples, the measure of suitability may additionally depend on an image quality of the 2D image, and in particular, on a confidence of identifying the one or more points defining the first measurement in the 2D image. For instance, in the case of a measurement of a dimension of an object, a 2D image in which the relevant edges or corners of the object are sharply visible with high contrast may be considered more suitable for performing the measurement than a 2D image in which the image is blurred (e.g. due to a lack of focus or motion in the scene) and/or in which the object has low contrast with its surroundings.

Having determined a measure of suitability for each 2D image in the set in which the first measurement to be performed is visible, the processing system 120 is configured to select one or more 2D images in which to perform the first measurement. For instance (assuming that a higher measure of suitability indicates that the 2D image is more suitable for performing the first measurement), the processing system may select the N images with the highest measures of suitability (where $N \geq 1$ if the first measurement is a distance measurement or $N \geq 2$ if the first measurement is a world coordinate). For instance, where the measure of suitability is a distance between image coordinates representing the measurement, the 2D image having the maximum distance between image coordinates may be selected for performing the first measurement. Alternatively, the processing system may select any image for which the measure of suitability exceeds a predetermined threshold. In some examples, all 2D images in which the position of the first measurement has been successfully identified may be selected for performing the first measurement.

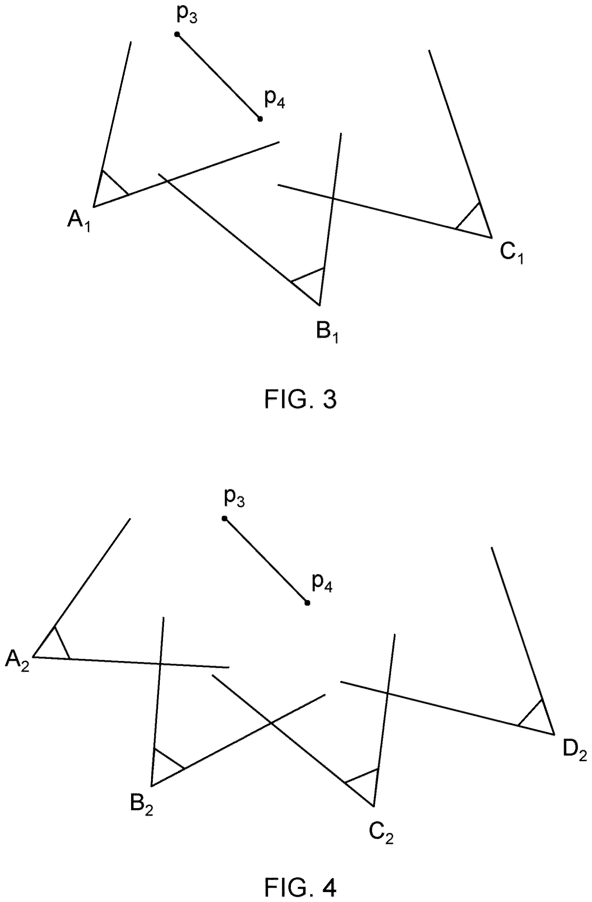

Figs. 3 and 4 illustrate how one or more 2D images are selected for performing the first measurement based on suitability. In each of Figs. 3 and 4, the first measurement to be performed is a distance between point $p_3$ and point $p_4$.

Fig. 3 illustrates the viewpoints $A_1$, $B_1$ and $C_1$ for a first set of 2D images. A 2D image at viewpoint $A_1$ may be selected as the 2D image in which to perform the first measurement. Viewpoint $A_1$ is the most suitable for performing the first measurement, as this viewpoint is both the closest to the distance between $p_3$ and $p_4$ and the closest to being orthogonal to the distance between $p_3$ and $p_4$.

Fig. 4 illustrates the viewpoints $A_2$, $B_2$, $C_2$ and $D_2$ for a second set of 2D images. 2D images at viewpoints $A_2$ and $B_2$ may be selected as the 2D images in which to perform the first measurements. Viewpoints $A_2$ and $B_2$ are the most suitable for performing the first measurement, as these viewpoints are both the closest to the distance between $p_3$ and $p_4$ and the closest to being orthogonal to the distance between $p_3$ and $p_4$. Further, using both a 2D image at viewpoint $A_2$ and a 2D image at viewpoint $B_2$ may provide a more accurate value for the first measurement than using either of these images alone, as a viewpoint orthogonal to the distance between $p_3$ and $p_4$ would be between viewpoints $A_2$ and $B_2$.

Returning to Fig. 1, the processing system 120 is then configured to process at least the depth map corresponding to each of the selected one or more 2D images to perform the first measurement.

If only one 2D image is selected, the first measurement may be performed by using the depth values for each measurement point for the first measurement in the selected 2D image, and the position and orientation of the viewpoint of the selected 2D image (i.e. a position and orientation of a camera that acquired the 2D image, or a virtual camera in the case of a synthesized image), to determine a world coordinate for the measurement point (where the first measurement is a distance between measurement points). The processing system 120 may then calculate the distance between the world coordinates as the value for the first measurement.

For instance, the length *L* of an object may be determined using the equation:

$$\hat{L} = \|\boldsymbol{x}_1 - \boldsymbol{x}_2\|_2 \qquad (1)$$

where $\boldsymbol{x}_1$ and $\boldsymbol{x}_2$ are the world coordinates of points at either end of the object, determined using the depth values for pixels corresponding to the points in the 2D image selected for performing the first measurement.

If a plurality of 2D images is selected, the first measurement may be performed by processing, for each of the selected plurality of 2D images, at least the depth map corresponding to the 2D image to determine an initial value for the first measurement. The initial values for the first measurement may then be processed to determine a final value for the first measurement.

If the first measurement is a world coordinate for a point, each initial value may be determined by determining an initial world coordinate for the point for each selected 2D image based on the depth value for the pixel corresponding to the point in the respective 2D image (using the position and orientation of the viewpoint of the 2D image). If the first measurement is a distance measurement, each initial value may be determined as described above (i.e. by determining world coordinates for the measurement points defining the distance based on the depth values for the respective 2D image, and then determining the distance between the world coordinates).

The final value for the first measurement may be determined by a weighted average of the initial values. For example, each initial value may be weighted according to the determined measure of suitability of performing the first measurement in the 2D image from which the initial value was determined, with the initial values for 2D images that are more suitable for performing the first measurement having a higher weight.

For instance, the length L of an object may be determined using the equation:

$$\hat{L} = \frac{\sum_v w^{(v)} \left\| x_1^{(v)} - x_2^{(v)} \right\|_2}{\sum_v w^{(v)}} \qquad (2)$$

where $x_1^{(v)}$ and $x_2^{(v)}$ are the world coordinates of points at either end of the object, determined using the depth values for pixels corresponding to the points in 2D image $v$, and $w^{(v)}$ is the view-dependent weight for 2D image $v$, which is determined according to the measure of suitability of performing the first measurement in the 2D image $v$.

The view-dependent weight $w^{(v)}$ may, for example, be determined using the equation:

$$w^{(v)} \equiv \left\| \tilde{\mathbf{p}}_1 - \tilde{\mathbf{p}}_2 \right\|_2 \qquad (3)$$

where $\tilde{\mathbf{p}}_1$ and $\tilde{\mathbf{p}}_2$ are image coordinates in 2D image $v$ for pixels corresponding to the points at either end of the object. As described above, a 2D image having a larger distance in image coordinates between pixels corresponding to the measurement points is more suitable for performing the measurement, and is therefore given a higher view-dependent weight.

In some examples, the processing system 120 may be further configured to process the first measurement to generate measurement data for the scene. The measurement data may comprise the first measurement and/or information derived from the first measurement.

In some examples, the measurement data may comprise information derived from the first measurement and in combination with one or more further measurements. For example, where the first measurement is a first dimension of an object in the scene, the measurement data may comprise information derived from the first measurement in combination with one or more further measurements, each of which is a measurement of a further dimension of the object (e.g. if the first measurement is a length of an object, the one or more further measurements may comprise a width and/or a height of the same object).

The processing system 120 may then be configured to generate measurement data for the scene by performing one or more further measurements, and processing the first measurement and the one or more further measurements to generate the measurement data. Each of the one or more further measurements may be performed using the same technique described above with reference to performing the first measurement (i.e. by identifying a position of the further measurement to be performed in a first 2D image in the set, identifying, where visible, a position of the further measurement in each remaining 2D image in the set, determining a measure of suitability of performing the further measurement in each 2D image in which the position of the further measurement to be performed is visible, selecting one or more 2D images in which to perform the measurement based on the determined measures of suitability, and processing at least the depth map corresponding to each of the selected one or more 2D images to perform the further measurement).

The processing system 120 may, for instance, process the first measurement and the one or more further measurements to generate one or more of: an area of the object (i.e. an area of a surface of the object), a volume of the object, and/or a size and position of a 3D bounding box for the object. In some examples, the measurement data may additionally or alternatively comprise the values of the first measurement and one or more further measurements themselves. As the skilled person will readily appreciate, the generation of an area or volume of the object may depend on the object's shape.

As described above, in some examples, the processing system 120 may automatically identify a plurality of key points in the first 2D image. The processing system may carry out the method described above with reference to performing the first measurement to determine a distance between each key point and each other key point belonging to the same object to generate measurement data for the object. The measurement data may include one or more of: a size and position of a 3D bounding box for the object, one or more dimensions of the object, an area of the object, a volume of the object, and/or a position of the object within the scene (e.g. a world coordinate for the center of the object). In this way, metadata for each object in the scene may be automatically generated.

In examples in which the 2D images belong to a plurality of video sequences, the processing system 120 may be configured to generate measurement data for each object in the scene for a plurality of sets of 2D images, each set of 2D images corresponding to a different time. For instance, the processing system may generate measurement data for each object at predetermined intervals. In some examples, the processing system may generate measurement data for each object at a frame rate of the video sequences (i.e. measurement data may be generated for every frame). This enables the measurement data for an object to be used to analyze the motion of the object (e.g. using the Kalman filter).

In some examples, the processing system 120 may be further configured to encode, into a bitstream, the measurement data. In some examples, the encoding of the measurement data may be performed separately to the generation of the measurement data. For instance, a first computer program product may allow semi-automated annotation or extraction of measurement data that is stored by the first software tool in a proprietary file format, and the encoding of the measurement data may then be performed separately using a second computer program product.

An indication of the viewpoint of each of the one or more 2D images used to perform the first measurement may also be encoded into the bitstream. In examples in which the measurement data comprises information derived from the first measurement in combination with one or more further measurements, an indication of the viewpoint of each of the one or more 2D images used to perform each of the one or more further measurements may also be encoded into the bitstream (i.e., the processing system may be configured to encode, into the bitstream, the measurement data and an indication of the viewpoint of each of the one or more 2D images used to perform each measurement used to generate the measurement data). If the measurement data is generated using more than one measurement, the bitstream may further comprise metadata associating each indication of viewpoint with the measurement for which the 2D image corresponding to the viewpoint was used.

The indication of the viewpoint of an 2D image used to perform a measurement may, for example, be a source view ID (if the relevant 2D image was acquired by one of the plurality of cameras 110) or a position and orientation of a virtual camera at the viewpoint (if the relevant 2D image is a synthesized image). The position and orientation of a virtual camera may be provided in world coordinates (i.e. provide the position and orientation with respect to the scene as a whole) or may be expressed relative to one or more of the plurality of cameras 110. Providing this information enables the measurements to be reproduced by a receiver of the bitstream.

In some examples, additional information relating to the measurement data may also be encoded into the bitstream (i.e. as metadata). The additional information may, for instance, comprise one or more of: image coordinates of the one or more points defining the measurement in each 2D image used to perform the measurement; an identification of an object to which the measurement data relates (if all measurement points belong to the same object, for instance if the measurement data comprises a dimension of an object, an area of an object, a volume of the object, a position of the object, or a size and/or position of a 3D bounding box for the object); and/or an identification of the processing system used to generate the measurement data. Additionally or alternatively, further information for an object to which the measurement data relates may be encoded into the bitstream. For example, in medical applications where the measurement data relates to a patient, the bitstream may further comprise patient data, such as the age, weight and/or gender of the patient.

As previously stated, in some examples, one or more of the set of 2D images may each belong to a respective video sequence of the scene. In these examples, it is desirable to be able to identify, at a receiver of the bitstream, which frame of the video sequence the measurement data belongs to.

In some examples, the measurement data may be encoded into the same bitstream as the video sequence(s) and associated depth information. The video sequence(s) and associated depth information may be encoded in a multi-view plus depth format. The processing system 120 may be configured to encode the measurement data and the indication of the viewpoint of each of the one or more 2D images used to perform the first measurement adjacent to the set of 2D images and corresponding depth maps in the bitstream.

Alternatively, the processing system 120 may encode, into the bitstream, an indication of the position of the set of 2D images in the one or more video sequences. For instance, a timestamp corresponding to a position in time of the set of 2D images in the one or more video sequences (i.e. a time at which images in the 2D set of images were captured, relative to a start time of the video sequence(s)), a frame count for the set of 2D images, or any other suitable frame marker may be encoded into the bitstream with the measurement data.

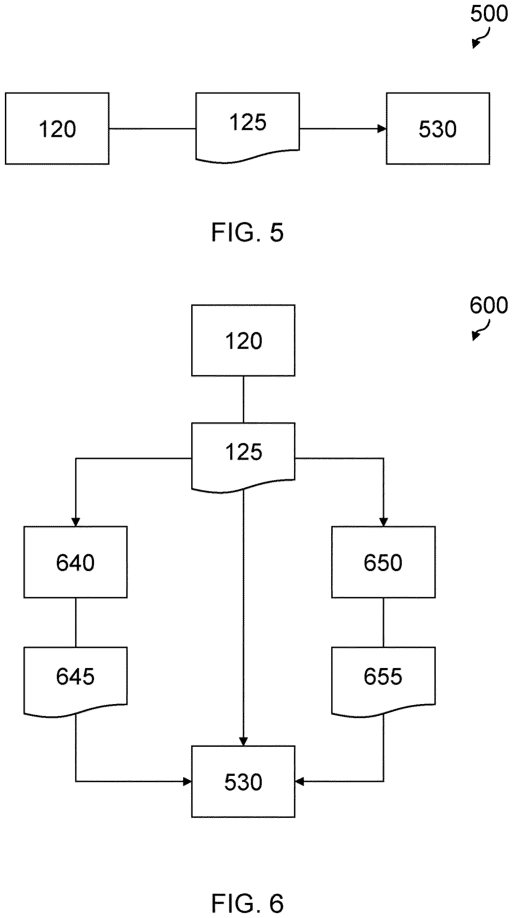

Fig. 5 illustrates a first video processing pipeline 500, according to an embodiment of the invention. The first video processing pipeline comprises the processing system 120 and a decoder 530. The processing system is configured to encode the measurement data and the indication of the viewpoint of each of the one or more 2D images used to perform the first measurement into a bitstream 125, as described above. The bitstream 125 is, itself, an embodiment of the invention. Although the bitstream is encoded by the processing system 120 in Fig. 5, the skilled person will appreciate that, in some examples, the encoding of the bitstream maybe performed separately to the generation of the measurement data.

The decoder 530 is configured to receive and decode the bitstream 125. If the bitstream 125 does not comprise the encoded video data and depth information, the decoder may also be configured to receive and decode a separate bitstream, and associate the measurement data with a video frame in each of one or more decoded video sequences based on an indication of the position of the set of 2D images in the one or more video sequences in the bitstream 125.

In some examples, the decoder may be configured to provide the video sequence(s) to a display device. The display device may display the measurement data as an overlay on any video frame that was used to generate the measurement data.

In some examples, different measurement data may be generated by each of a plurality of processing systems, and combined at an end user device.

Fig. 6 illustrates a second video processing pipeline 600, according to an embodiment of the invention. The second video processing pipeline comprises the processing system 120, the decoder 530, a first intermediate processing system 640 and a second intermediate processing system 650.

The processing system 120 is configured to encode the measurement data and the indication of the viewpoint of each of the one or more 2D images used to perform the first measurement into a bitstream 125, as described above. Again, although the bitstream is encoded by the processing system 120 in Fig. 6, the skilled person will appreciate that, in some examples, the encoding of the bitstream maybe performed separately to the generation of the measurement data.

In the second video processing pipeline, the bitstream 125 comprises the encoded video data and depth information. The bitstream is transmitted to the decoder 530, the first intermediate processing system 640 and the second intermediate processing system 650.

The first and second intermediate processing systems 640, 650 may each be a processing system according to an embodiment of the invention (e.g. each intermediate processing system may be functionally similar or identical to the processing system 120). Each intermediate processing system is configured to receive and decode the bitstream 125 to obtain a respective set of 2D images of the scene. Each intermediate processing system may then generate additional measurement data using the respective set of 2D images, using any of the methods described above. This, for example, allows measurement data requiring the use of a proprietary algorithm and/or an expert user to be generated.

The first intermediate processing system 640 is configured to encode, into a first additional bitstream 645, the additional measurement data generated by the first intermediate processing system, an indication of the viewpoint of each of the one or more 2D images used to generate the additional measurement data, and an indication of the position of the respective set of 2D images in the one or more video sequences. Similarly, the second intermediate processing system 650 is configured to encode, into a second additional bitstream 655, the additional measurement data generated by the second intermediate processing system, an indication of the viewpoint of each of the one or more 2D images used to generate the additional measurement data, and an indication of the position of the respective set of 2D images in the one or more video sequences.

The decoder 530 is configured to receive and decode the bitstream 125, the first additional bitstream 645 and the second additional bitstream 655, and to associate the additional measurement data generated by each of the first and second intermediate processing systems 640, 650 with a respective video frame in each of one or more decoded video sequences based on the indication of the position of the respective set of 2D images in the one or more video sequences in the first and second additional bitstreams respectively.

The decoder 530 may be configured to provide the video sequence(s) to a display device. The display device may display the measurement data, the additional measurement data generated by the first intermediate processing system and/or the additional measurement data generated by the second intermediate processing system as an overlay on any video frame that was used to generate the respective measurement data.

In some examples, the first intermediate processing system 640 and/or the second intermediate processing system 650 may additionally or alternatively determine other information from the video sequences and depth information encoded in the bitstream 125. This other information may be encoded into the first and/or second additional bitstream, as appropriate, along with an indication of the position of the video frame(s) used to determine the other information in the video sequence(s). For instance, in medical applications, one intermediate processing system may detect patient pose and activity using a first proprietary algorithm, while another intermediate processing system may determine one or more vital signs (e.g. heart rate) of the patient using a second proprietary algorithm.

Although the second video processing pipeline illustrated in Fig. 6 has two intermediate processing systems, the skilled person will readily appreciate that any number of intermediate processing systems may be used. For instance, a video processing pipeline may have a single intermediate processing system, and a decoder may receive one bitstream, comprising encoded video data and depth information, from one processing system, and another bitstream, comprising measurement data generated from the video data and depth information, from the intermediate processing system.

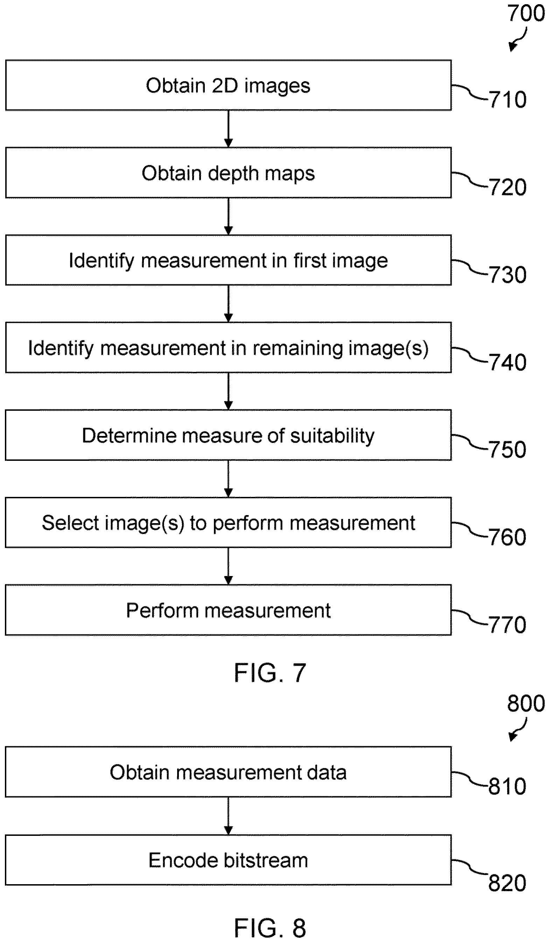

Fig. 7 illustrates a method 700 for performing measurements using imaging data, according to an embodiment of the invention.

The method 700 begins at step 710, at which a set of 2D images of a scene is obtained. Each 2D image in the set is a 2D image of the scene from a different viewpoint.

At step 720, a depth map is obtained for each 2D image in the set.

At step 730, a position of a first measurement to be performed is identified in a first 2D image in the set. The first measurement to be performed may be identified using any of the methods described above.

At step 740, a position of the first measurement to be performed is identified, where visible, in each remaining 2D image in the set.

At step 750, a measure of suitability of performing the first measurement in each 2D image in which the position of the first measurement to be performed is visible (i.e. in each 2D image in which the position of the first measurement has been successfully identified) is determined.

At step 760, one or more 2D images in which to perform the first measurement are selected based on the determined measures of suitability.

At step 770, at least the depth map corresponding to each of the selected one or more 2D images is processed to perform the first measurement (i.e. to determine a value for the first measurement).

Fig. 8 illustrates a method 800 for encoding measurement data for a scene, according to an embodiment of the invention.

The method 800 begins at step 810, at which measurement data, generated by performing one or more measurement in one or more 2D images, is obtained. In some examples, the measurement data may be generated by performing the method 700 described above, and processing the first measurement obtained by performing the method 700 to generate the measurement data.

At step 820, the measurement data and an indication of the viewpoint of each of the one or more 2D images used to perform the first measurement are encoded into a bitstream.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A method (700) for performing measurements using imaging data, the method comprising:

   obtaining a set of 2D images (115) of a scene, wherein each 2D image is a 2D image of the scene from a different viewpoint;
   for each 2D image in the set, obtaining a depth map for the 2D image;
   identifying a position of a first measurement (L) to be performed in a first 2D image in the set;
   identifying, where visible, a position of the first measurement to be performed in each remaining 2D image in the set;

for each 2D image in which the position of the first measurement to be performed is visible, determining a measure of suitability of performing the first measurement in the 2D image;

based on the determined measures of suitability, selecting one or more 2D images in which to perform the first measurement; and

processing at least the depth map corresponding to each of the selected one or more 2D images to perform the first measurement.

2. The method (700) of claim 1, wherein identifying the position of the first measurement (L) to be performed in the first 2D image in the set (115) comprises receiving a user input indicating the position of the first measurement to be performed.

3. The method (700) of claim 1 or 2, wherein identifying the position of the first measurement (L) to be performed in the first 2D image in the set (115) comprises processing the first 2D image to identify a plurality of key points in the first 2D image.

4. The method (700) of any of claims 1 to 3, wherein:

selecting one or more 2D images in which to perform the first measurement (L) comprises selecting a plurality of 2D images; and

performing the first measurement comprises:

for each of the selected plurality of 2D images, processing at least the depth map corresponding to the 2D image to determine an initial value for the first measurement; and

processing the initial values for the first measurement to determine a final value for the first measurement.

5. The method (700) of claim 4, wherein determining the final value for the first measurement comprises determining a weighted average of the initial values, wherein each initial value is weighted according to the determined measure of suitability of performing the first measurement in the 2D image from which the initial value was determined.

6. The method (700) of any of claims 1 to 5, wherein the step of obtaining a set of 2D images (115) of a scene comprises:

receiving a bitstream comprising encoded video data and depth information for a scene; and

decoding the video data and depth information.

7. The method (700) of any of claims 1 to 6, wherein the method further comprises processing the first measurement (L) to generate measurement data for the scene.

8. The method (700) of claim 7, wherein:

the first measurement (L) is a first dimension of an object (200) in the scene; and

generating measurement data for the scene comprises:

performing one or more further measurements, wherein each further measurement is a further dimension of the object, and wherein each further measurement is performed by:

identifying a position of the further measurement to be performed in a first 2D image in the set (115);

identifying, where visible, a position of the further measurement to be performed in each remaining 2D image in the set;

for each 2D image in which the position of the further measurement to be performed is visible, determining a measure of suitability of performing the further measurement in the 2D image;

based on the determined measures of suitability, selecting one or more 2D images in which to perform the further measurement; and

processing at least the depth map corresponding to each of the selected one or more 2D images to perform the further measurement; and

processing the first measurement and the one or more further measurements to generate the measurement data.

9. The method (700) of claim 8, wherein the measurement data comprises one or more of:
the first measurement (L) and the one or more further measurements; an area of the object (200); a volume of the object; and/or a size and position of a 3D bounding box for the object.

10. A method (800) for encoding measurement data for a scene, the method comprising:

obtaining measurement data generated by performing one or more measurements in one or more 2D images; and
encoding, into a bitstream (125):

the measurement data; and
an indication of the viewpoint of each of the one or more 2D images used to perform the first measurement.

11. The method (800) of claim 10, wherein the measurement data is obtained by performing the method (700) of any of claims 7 to 9.

12. The method (800) of claim 10 or 11, wherein:

one or more of the 2D images each belong to a respective video sequence of the scene; and
the method further comprises encoding each video sequence and depth information for each video sequence into the bitstream, wherein the measurement data and the indication of the viewpoint of each of the one or more 2D images used to perform the first measurement are adjacent in the bitstream to the one or more of the 2D images that belong to the one or more video sequences .

13. The method (800) of claim 10 or 11, wherein:

one or more of the 2D images each belong to a respective video sequence of the scene; and
the method further comprising encoding, into the bitstream, an indication of the position of the one or more 2D images in the video sequences.

14. A computer program product comprising computer program code means which, when executed on a computing device having a processing system, cause the processing system to perform all of the steps of the method (700, 800) according to any one of claims 1 to 13.

15. A processing system (120) for performing measurements using imaging data, the processing system being configured to:

obtain a set of 2D images (115) of a scene, wherein each 2D image is a 2D image of the scene from a different viewpoint;
for each 2D image in the set, obtain a depth map for the 2D image;
identify a position of a first measurement (L) to be performed in a first 2D image in the set;
identify, where visible, a position of the first measurement to be performed in each remaining 2D image in the set;
for each 2D image in which the position of the first measurement to be performed is visible, determine a measure of suitability of performing the first measurement in the 2D image;
based on the determined measures of suitability, select one or more 2D images in which to perform the first measurement; and
process the selected one or more 2D images and corresponding one or more depth maps to perform the first measurement.

16. A processing system (120) for encoding measurement data for a scene, the processing system being configured to:

obtain measurement data generated by performing one or more measurements in one or more 2D images; and
encode, into a bitstream (125):

the measurement data; and
an indication of the viewpoint of each of the one or more 2D images used to perform the first measurement.

17. A bitstream (125) comprising:

measurement data generated by performing one or more measurements in one or more 2D images; and an indication of a viewpoint of each of the one or more 2D images used to generate the measurement data.

FIG. 1

FIG. 2

FIG. 3

FIG. 4

FIG. 5

FIG. 6

700

Obtain 2D images 710

Obtain depth maps 720

Identify measurement in first image 730

Identify measurement in remaining image(s) 740

Determine measure of suitability 750

Select image(s) to perform measurement 760

Perform measurement 770

FIG. 7

800

Obtain measurement data 810

Encode bitstream 820

FIG. 8

## EUROPEAN SEARCH REPORT

**Application Number**

EP 24 19 6725

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/138979 A1 (ADKINSON SEAN M [US] ET AL) 5 May 2022 (2022-05-05) <br> * abstract; claims 1-5; figure 4 * <br> * paragraphs [0028] - [0029] * <br> * paragraphs [0044] - [0061] * <br> ----- | 1-9,14, 15 | INV. <br> G06T7/60 |
| Y <br><br> A | US 2017/220887 A1 (FATHI HABIB [US] ET AL) 3 August 2017 (2017-08-03) <br> * abstract; claims 1,3,5-7,16; figures 1-2B * <br> * paragraph [0012] * <br> * paragraph [0040] * <br> * paragraphs [0049] - [0052] * <br> * paragraph [0055] * <br> * paragraphs [0067] - [0068] * <br> * paragraph [0141] * <br> * paragraphs [0145] - [0147] * <br> ----- | 1-4,6-9, 14,15 <br><br> 5 | |
| Y <br><br> A | US 2016/042521 A1 (BOARDMAN DAVID [US] ET AL) 11 February 2016 (2016-02-11) <br> * abstract; claims 48,50,54,55; figure 1 * <br> * paragraph [0010] * <br> * paragraph [0019] * <br> * paragraph [0098] * <br> * paragraph [0123] * <br> * paragraphs [0129] - [0146] * <br> ----- | 1-4,6-9, 14,15 <br><br> 5 | |

**TECHNICAL FIELDS SEARCHED (IPC)**

G06T
G06V

The present search report has been drawn up for all claims

| Place of search | Date of completion of the search | Examiner |
|---|---|---|
| The Hague | 7 February 2025 | Fronthaler, Hartwig |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 24 19 6725

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 15(completely); 14(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-9, 15(completely); 14(partially)

   The technical effect of claims 1-9 and 15 is improved image-based measurement. This is solved by labelling a measurement position in a first 2D image and selecting further 2D images of the same scene from different viewpoints based on quality criteria. The final measurement is a weighted average of measurements performed in the depth maps of the first and the additionally selected images.
   ---

2. claims: 10-13, 16, 17(completely); 14(partially)

   The technical effect is packing of measurement information for transmission. This is achieved by encoding viewpoints and measurement data into a bitstream. The meta-data information is either encoded together with the corresponding video and depth information or separately with pointers to the corresponding images in the videos sequences.
   ---

## ANNEX TO THE EUROPEAN SEARCH REPORT
## ON EUROPEAN PATENT APPLICATION NO.

EP 24 19 6725

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | Publication date | Patent family member(s) | | Publication date |
|---|---|---|---|---|
| US 2022138979 A1 | 05-05-2022 | US | 2022138979 A1 | 05-05-2022 |
| | | WO | 2022098491 A1 | 12-05-2022 |
| US 2017220887 A1 | 03-08-2017 | EP | 3408848 A1 | 05-12-2018 |
| | | US | 2017220887 A1 | 03-08-2017 |
| | | US | 2018225539 A1 | 09-08-2018 |
| | | US | 2020320327 A1 | 08-10-2020 |
| | | US | 2022237885 A1 | 28-07-2022 |
| | | US | 2024153290 A1 | 09-05-2024 |
| | | WO | 2017132636 A1 | 03-08-2017 |
| US 2016042521 A1 | 11-02-2016 | AU | 2014236959 A1 | 15-10-2015 |
| | | EP | 2973409 A2 | 20-01-2016 |
| | | US | 2014270480 A1 | 18-09-2014 |
| | | US | 2016042521 A1 | 11-02-2016 |
| | | WO | 2014151746 A2 | 25-09-2014 |

EPO FORM P0459

For more details about this annex : see Official Journal of the European Patent Office, No. 12/82